# EUROPÄISCHE PATENTANMELDUNG

(11) **EP 0 930 692 A2**
(43) Veröffentlichungstag der Anmeldung: **21.07.1999**
(21) Anmeldenummer: 98124564.0
(22) Anmeldetag: 22.12.1998
(51) Int. Cl.: H02K 9/06, H02K 49/10

(54) **Elektromotorischer Antrieb**

(30) Priorität: 15.01.1998 DE 19801310
(71) Anmelder: SIEMENS AKTIENGESELLSCHAFT, 80333 München (DE)
(72) Erfinder: Pittius, Ekkehard Dr., 91154 Roth (DE)

(57) **Zusammenfassung**

Bei einem Antrieb für Schienenfahrzeuge und spurgebundene Fahrzeuge soll die Kühlung des Antriebsmotors (8) verbessert werden. Hierzu ist eine elektromagnetische Drehzahlbegrenzungs- und Regelungseinrichtung (5, 20 bzw. 5', 20') zwischen der Motorwelle (3, 3') und dem Lüfterrad (1, 1') vorgesehen. Diese Einrichtung wird von segmentartigen Aussparungen (20, 20') im magnetisch leitfähigen Material entweder der Nabe (11) des Lüfterrades (1) oder im Umfang der Motorwelle (3') und dem mit Permanentmagneten (5, 5') bestückten anderen Drehteil (Motorwelle 3 bzw. Lüfterrad 1') gebildet.

## Beschreibung

Die Erfindung betrifft einen elektromotorischen Antrieb, insbesondere für Schienenfahrzeuge und spurgebundene Fahrzeuge, mit einem Elektromotor und wenigstens einem auf der Motorwelle angeordneten Lüfterrad, wobei eine von der Motordrehzahl abhängige elektromagnetische Schlupfkupplung zwischen der Motorwelle und dem frei drehbar auf der Motorwelle gelagerten Lüfterrad angeordnet ist.

Elektromotoren für schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außenkühlkanäle saugt oder drückt.

Um das durch einen Ventilator mit zunehmender Rotationsgeschwindigkeit ansteigende Motorengeräusch zu reduzieren, ist aus der CH-A-664 242 ein Kühlluftventilator für eine drehende elektrische Maschine bekannt, mit einem an einem Joch befestigten Stator und einem auf einer drehbar auf dem Joch gestützten Welle befestigten Rotor, wobei der Kühlluftventilator drehbar mittels eines Lagers auf der Welle angeordnet ist. Eine Mehrzahl von Magnetpaaren sind auf dem Rotor oder dem Ventilator befestigt. Eine nicht eisenhaltige Scheibe ist am Ventilator oder dem Rotor befestigt und weist einen ringförmigen, zwischen den Magnetpaaren angeordneten Flansch auf. Der Ventilator wird durch die Wechselwirkung zwischen den Magneten und im Scheibenflansch induzierten Wirbelströmen angetrieben. Es tritt ein als Funktion der Geschwindigkeit ansteigender Schlupf auf, wobei der durch den Ventilator bewirkte Geräuschpegel reduziert wird. Bei hohen Motordrehzahlen kann es bei ausreichender Fahrtwindkühlung wünschenswert sein, daß die Mitnahmewirkung der Kupplung bis zur Wirkungslosigkeit aufhebbar ist. Dies läßt sich mit der bekannten Magnetkupplung nicht erreichen.

Es wurde gefunden, daß bei der eingangs beschriebenen Motorkühlung mittels eines fest auf der Motorwelle sitzenden Lüfterrades die Kühlluftmenge in hohem Maße drehzahlproportional zur jeweiligen Motordrehzahl ist, wodurch in der Regel im Bereich hoher Drehzahlen eine zur Kühlung nicht erforderliche große Kühlluftmenge entsteht, die einen hohen Energieverbrauch und erhebliche Störgeräusche verursacht. Der hohe Energieaufwand trägt seinerseits wieder zu einer unnötigen Erwärmung des Antriebsmotors bei.

Um einen elektromotorischen Antrieb der eingangs genannten Art bezüglich Kühlung, Funktionssicherheit und Aufbau zu verbessern, wird in der WO 96/37035 eine elektromagnetische Drehzahlbegrenzungs- und Regelungseinrichtung zwischen der Motorwelle und dem Lüfterrad vorgeschlagen, welche die Kühlluftförderung auf die erforderliche Kühlluftmenge begrenzt, wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt. Bei den in der WO 96/37035 beschriebenen Ausführungen ist vorgesehen, daß das Lüfterrad über ein in die Lüfterradnabe eingesetztes Lager frei drehbar auf der Motorwelle gelagert ist, wobei die Lüfterradnabe eine axiale Fixierung zur Motorwelle aufweist und wobei zwischen dem Lager des Lüfterrades und den elektromagnetischen Teilen eine Wärmedämmung mit Abstandshalter angeordnet ist. Bei diesen bekannten Ausführungen ist ferner vorgesehen, daß entweder in der Nabe des Lüfterrades eine Kurzschlußwicklung vorgesehen oder das Lüfterrad mit Permanentmagneten und die Motorwelle mit einer Kurzschlußwicklung versehen ist. Die elektromagnetische Rutschkupplung nach der WO 96/37035 basiert damit auf dem Funktionsprinzip Permanentmagneterregung-Käfigwicklung. Die Herstellung der Käfigwicklung ist recht aufwendig. Weiterhin bedingt dieses Funktionsprinzip einen Strom in der Wicklung, da sonst kein Drehmoment entsteht und die Lüfternabe sich sonst nicht mitdreht. Es entstehen also im gesamten Drehzahlbereich Stromwarmeverluste, die den Wirkungsgrad der Maschine verschlechtern und das zwischen Motorwelle und Lüfternabe angeordnete Lager thermisch belasten.

Die Aufgabe der vorliegenden Erfindung ist es, einen elektromotorischen Antrieb dieser Art weiter zu vereinfachen und zu verbessorn.

Erfindungsgemäß wird dies mit den in den Patentansprüchen 1 bzw. 2 gekennzeichneten elektromotorischen Antrieben erreicht. Dabei zeichnet sich die Erfindung dadurch aus, daß - anstelle der Käfigwicklung und bei Wegfall einer Wärmedämmung - durch segmentartige Aussparungen oder Lücken im magnetisch leitfähigen Material, entweder in der Nabe des Lüfterrades oder im Umfang der Motorwelle, eine gleiche Polteilung entsteht, wie die Permanentmagnete im anderen Teil aufweisen. So entsteht ein permanentmagneterregter Reluktanzmotor-Antrieb für den Lüfter, der auch einen Ablösepunkt aufweist. Der erfindungsgemäße Antrieb ist einfacher herzustellen, da kein Käfigläufer und keine Wärmedämmung erforderlich sind und die Kurzschlußwicklung entfällt. Der erfindungsgemäße Antrieb hat ferner die Vorteile, daß bis zum Kippunkt keine Verluste in der Lüfternabe auftreten, nach dem Kippunkt die Verluste geringer sind und dabei sogar noch ein Drehzahlabfall erreichbar ist.

Vorteilhafte Ausgestaltungen der Erfindung sind in den weiteren Patentansprüchen angegeben.

Die Erfindung wird im folgenden an den in der Zeichnung dargestellten Ausführungsbeispielen noch weiter erläutert.

Dabei zeigen:
Figur 1 einen Teilschnitt durch einen erfindungsgemäßen elektromotorischen Antrieb, wie er insbesondere für mit hohen Drehzahlen betreibbare Drehstrom-Bahnmotoren geeignet ist,
Figur 2 eine schematische Teilansicht einer mit Permanentmagneten bestückten Motorwelle und einer mit einer entsprechenden Polteilung mit segmentartigen Aussparungen versehenen Nabe eines Lüfterrades,
Figur 3 einen Ausschnitt einer Variante der Drehzahlbegrenzungs- und Regelungseinrichtung, wobei in der Lüfterradnabe die Permanentmagnete und über den Umfang der Motorwelle die segmentartigen Aussparungen angeordnet sind.

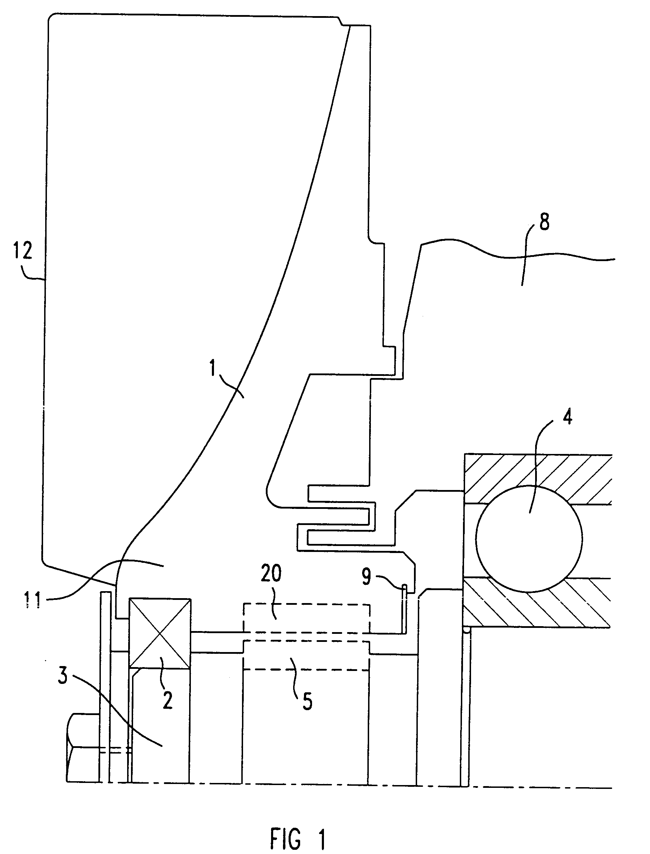

In Figur 1 sind von einem an sich bekannten Elektromotor 8 ein Motorlager 4 und eine Motorwelle 3 dargestellt. Auf die Motorwelle 3 ist zur Luftkühlung des Elektromotors 8 ein Lüfterrad 1 aufgesetzt. Dabei ist die Lüfterradnabe 11 unter Zwischenordnung eines Lagers 2 frei drehbar auf der Motorwelle 3 abgestützt, so daß das Lüfterrad ohne direkten Antrieb mit dem Motor 8 gekuppelt ist.

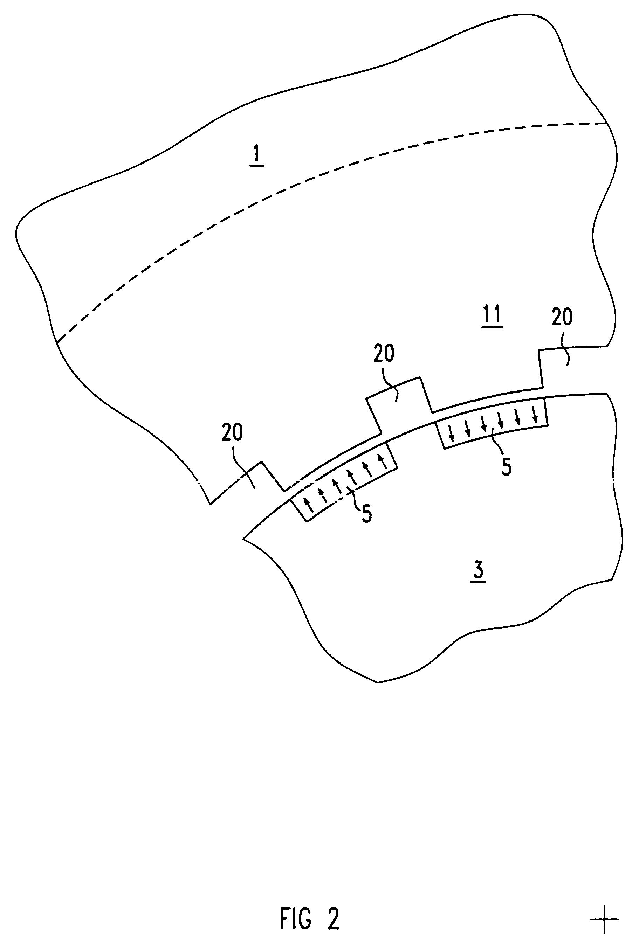

Zwischen dem frei drehbar auf der Motorwelle 3 gelagerten Lüfterrad 1 und der Motorwelle befindet sich eine elektromagnetische Drehzahlbegrenzungs- und Regelungseinrichtung für das Kühlluftgebläse. Diese im ersten Ausführungsbeispiel als elektromagnetische Schlupfkupplung 5, 20 ausgelegte Einrichtung wirkt in der Weise, daß mit steigender Motordrehzahl, insbesondere ab einem bestimmten Drehzahlbereich, über die Schlupfkupplung die Antriebswirkung auf das Lüfterrad abnimmt. Andererseits bewirkt die Schlupfkupplung bei einer unter einen bestimmten Drehzahlbereich abfallenden Motordrehzahl, daß die Antriebswirkung der Kupplung auf das Lüfterrad wieder zunimmt. Beim Ausführungsbeispiel nach den Figuren 1 und 2 wird die Drehzahlbegrenzungs- und Regelungseinrichtung gebildet von in der Nabe 11 des Lüfterrades 1 ausgesparten Segmenten oder Lücken 20 im Zusammenwirken mit Permanentmagneten 5, die an der Motorwelle 3 angebracht sind, derart, daß die Lücken 20 im magnetisch leitfähigen Material des Lüfterrades 1, 11 die gleiche Polteilung aufweisen wie die Permanentmagnete 5 am Umfang der Motorwelle 3. Mit 12 ist in Figur 1 ein Lüfterradflügel gezeichnet und auf der dem Motor 8 zugewandten Seite des Lüfterrades befindet sich eine axiale Fixierung 9 der Lüfterradnabe 11 zur Motorwelle 3.

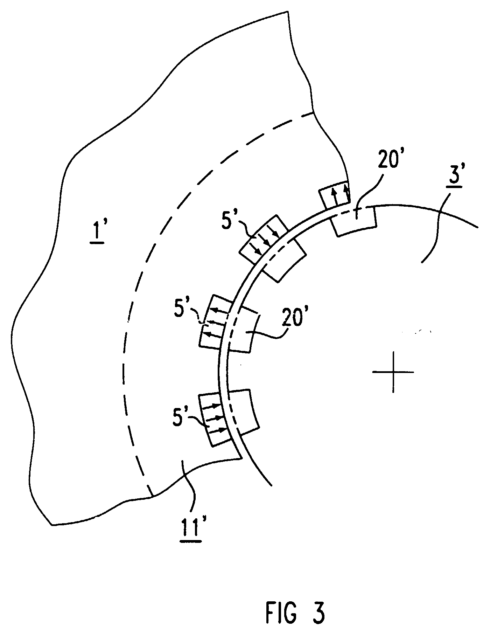

In Figur 3 ist in einem Ausschnitt eine Variante der Drehzahlbegrenzungs- und Regelungseinrichtung dargestellt. Hierbei sind in der Nabe 11' des Lüfterrades 1' die Permanentmagnete 5' angeordnet und in entsprechender Zuordnung weist die Motorwelle 3' an ihrem Umfang ausgesparte Segmente bzw. Lücken 20' auf.

Nach der Erfindung erfolgt die magnetische Erregung der Schlupfkupplung zwischen dem mit den Permanentmagneten 5, 5' bestückten Teil 3 bzw. 11' und dem mit den zugeordneten Lücken 20 bzw. 20' versehenen Teil 1, 11 bzw. 3' aus magnetisch leitfähigem Material. Diese Anordnung wird insbesondere so bemessen, daß - abgesehen von eventuellen Reaktionsmomenten - das maximale Moment (Kippmoment) bei einer vorgegebenen Drehzahl erreicht wird, bei der es zur Überwindung des Druckabfalles des aerodynamischen Kreises gerade ausreicht. Diese Drehzahl wird im allgemeinen zwischen 60 und 70 % der höchsten Motordrehzahl liegen. Steigt nun die Motordrehzahl über diesen Wert, so fällt aufgrund der Drehmoment-Polrad-Kennlinie der Kupplung das Lüfterrad außer Tritt. Die Drehzahl sinkt entsprechend des Trägheitsmomentes des Lüfterrades und entsprechend des Gegendruckes, wodurch Kühlluftmenge, Energieaufwand und Geräusch des Lüfters sinken.

Die Erfindung zeichnet sich durch eine besonders vorteilhafte und einfache Ausgestaltung aus, wobei zwischen dem frei drehbar auf der Motorwelle gelagerten Lüfterrad und der Motorwelle eine von der Motordrehzahl in ihrer Wirkung abhängige elektromagnetische Schlupfkupplung geschaffen ist, deren Mitnahmewirkung mit steigender Drehzahl der Motorwelle bis zur Wirkungslosigkeit aufhebbar ist und bei abfallender Motordrehzahl wieder auf die volle Mitnahmewirkung zunimmt.

Dabei wird eine an den Fahrbetrieb angepaßte Motorkühlung erreicht, ohne daß auf Fremdbelüftung oder Wasserkühlung zurückgegriffen werden muß und ohne einen großen technischen Bauaufwand bzw. die Notwendigkeit, spezielle und teuere Schalt- und Überwachungsgeräte einzusetzen. Ferner kann der elektromotorische Antrieb mit einfacher und robuster Eigenbelüftung ausgeführt werden.

In vorteilhafter Ausführung kann gemäß der Erfindung die Drehzahlproportionalität der Kühlluftmenge nur bis zu einer für die Kühlungsanforderungen ausreichenden Drehzahl beibehalten und ab dieser Motordrehzahl das Lüfterrad nicht mehr angetrieben werden, so daß der Energieverbrauch und die Geräusche des Gebläses deutlich reduzierbar sind.

## Patentansprüche

1. Elektromotorischer Antrieb, insbesondere für Schienenfahrzeuge und spurgebundene Fahrzeuge, mit einem Elektromotor (8) und wenigstens einem auf der Motorwelle (3) angeordneten Lüfterrad (1), wobei eine von der Motordrehzahl abhängige elektromagnetische Schlupfkupplung zwischen der Motorwelle und dem frei drehbar auf der Motorwelle gelagerten Lüfterrad angeordnet ist, wobei eine elektromagnetische Drehzahlbegrenzungs- und Regelungseinrichtung (5, 20) zwischen der Motorwelle (3) und dem Lüfterrad (1) vorgesehen ist, welche die Kühlluftförderung auf die erforderliche Kühlluftmenge begrenzt, wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis zur Wirkungslosigkeit aufhebbar ist und bei abfallender Motordrehzahl wieder auf die volle Mitnahmewirkung zunimmt, wobei das Lüfterrad (1) über ein in die Lüfterradnabe (11) eingesetztes Lager (2) frei drehbar auf der Motorwelle (3) gelagert ist, wobei die Motorwelle (3) Permanentmagnete (5) trägt und in der Nabe (11) des Lüfterrades (1) Segmente (20) ausgespart sind, wobei die segmentierte Nabe des Lüfterrades im Zusammenwirken mit den Permanentmagneten der Motorwelle und abhängig von der Motordrehzahl die Drehzahlbegrenzungs- und Regelungseinrichtung wirksam werden läßt.

2. Elektromotorischer Antrieb, insbesondere für Schienenfahrzeuge und spurgebundene Fahrzeuge, mit einem Elektromotor (8) und wenigstens einem auf der Motorwelle (3') angeordneten Lüfterrad (1'), wobei eine von der Motordrehzahl abhängige elektromagnetische Schlupfkupplung zwischen der Motorwelle und dem frei drehbar auf der Motorwelle gelagerten Lüfterrad angeordnet ist, wobei eine elektromagnetische Drehzahlbegrenzungs- und Regelungseinrichtung (5', 20') zwischen der Motorwelle (3') und dem Lüfterrad (1') vorgesehen ist, welche die Kühlluftförderung auf die erforderliche Kühlluftmenge begrenzt, wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis zur Wirkungslosigkeit aufhebbar ist und bei abfallender Motordrehzahl wieder auf die volle Mitnahmewirkung zunimmt, wobei das Lüfterrad (1') über ein in die Lüfterradnabe (11') eingesetztes Lager (2) frei drehbar auf der Motorwelle (3') gelagert ist, wobei das Lüfterrad (1') mit Permanentmagneten (5') versehen und die Motorwelle (3') über ihren Umfang segmentartige Aussparungen (20') aufweist, derart, daß im Zusammenwirken mit den Permanentmagneten des Lüfterrades und abhängig von der Motordrehzahl die Drehzahlbegrenzungs- und Regelungseinrichtung wirksam ist.

3. Elektromotorischer Antrieb nach Anspruch 1 oder 2, **dadurch gekennzeichnet,** daß die segmentartigen Aussparungen (20, 20') oder Lücken im magnetisch leitenden Material des Lüfterrades (1) oder der Motorwelle (3') die gleiche Polteilung wie die Permanentmagnete (5, 5') im anderen Teil (Motorwelle 3 bzw. Lüfterrad 1') aufweisen.

4. Elektromotorischer Antrieb nach Anspruch 1 oder 2, **dadurch gekennzeichnet,** daß das Lüfterrad (1, 1') für gekapselte oder durchzugsbelüftete Elektromotoren (8) auf deren Motorwelle (3, 3') für Saugoder Druckbelüftung frei gelagert und ausgebildet ist und wobei die Lüfterradnabe (11, 11') eine axiale Fixierung (9) zur Motorwelle (3, 3') aufweist.

5. Elektromotorischer Antrieb nach Anspruch 1 oder 2, **dadurch gekennzeichnet,** daß die Teile der elektromagnetischen Schlupfkupplung (5, 20 bzw. 5', 20') so bemessen sind, daß das maximale Kippmoment bzw. die höchste Mitnahmewirkung zwischen der Motorwelle und dem Lüfterrad bei einer vorgegebenen Motordrehzahl erreicht wird, bei der es zur Überwindung des Druckabfalles des aerodynamischen Kreises gerade ausreicht, wobei diese Drehzahl etwa im Bereich zwischen 60 und 70 % der höchsten Motordrehzahl liegt.

6. Elektromotorischer Antrieb nach Anspruch 1 oder 2, **dadurch gekennzeichnet,** daß er für mit hohen Drehzahlen betreibbare Drehstrom-Bahnmotoren vorgesehen ist.
